Europäisches Patentamt

European Patent Office

Office européen des brevets

(11) Veröffentlichungsnummer : **0 095 606**
**B1**

(12) **EUROPÄISCHE PATENTSCHRIFT**

(45) Veröffentlichungstag der Patentschrift :
26.04.89

(51) Int. Cl.⁴ : **B 41 F 33/00**, G 06 K 7/10,
G 06 K 9/00

(21) Anmeldenummer : 83104552.1

(22) Anmeldetag : 09.05.83

(54) Verfahren zur Ermittlung der Flächendeckung einer Druckvorlage oder Druckplatte für Druckmàschinen.

(30) Priorität : 29.05.82 DE 3220361
16.03.83 DE 3309443

(43) Veröffentlichungstag der Anmeldung :
07.12.83 Patentblatt 83/49

(45) Bekanntmachung des Hinweises auf die Patenterteilung : 26.04.89 Patentblatt 89/17

(84) Benannte Vertragsstaaten :
BE CH DE FR GB IT LI NL SE

(56) Entgegenhaltungen :
EP–A– 0 029 561
WO–A–81 /000 83
DE–A– 2 641 130
DE–A– 3 141 758
GB–A– 2 022 514

(73) Patentinhaber : Heidelberger Druckmaschinen Aktiengesellschaft
Kurfürsten-Anlage 52-60 Postfach 10 29 40
D-6900 Heidelberg 1 (DE)

(72) Erfinder : Jeschke, Willi
Berghalde 68
D-6900 Heidelberg (DE)
Erfinder : Kipphan, Helmut, Dr.
Biblena-Strasse 6
D-6830 Schwetzingen (DE)
Erfinder : Löffler, Gerhard
Kiefernweg 3
D-6909 Walldorf (DE)

(74) Vertreter : Stoltenberg, Baldo Heinz-Herbert
c/o Heidelberger Druckmaschinen AG Kurfürsten-
Anlage 52-60
D-6900 Heidelberg 1 (DE)

## Beschreibung

Die Erfindung bezieht sich auf ein Verfahren zur Ermittlung der Flächendeckung einer Druckvorlage oder Druckplatte gemäß dem Oberbegriff des Anspruchs 1.

Die Erfindung bezieht sich ebenso auf eine Vorrichtung zur Durchführung des Verfahrens gemäß dem Oberbegriff des Anspruchs 10.

Bekannt ist aus der US-Patentschrift 3 958 509 ein System zur Vorbestimmung der Einstellwerte der Farbzonenstellschrauben bei Druckmaschinen. Mit einer elektronischen Kamera wird die Flächendeckung zweier Eichplatten, einmal die für die 0 %-Eichung und zum anderen die für die 100 %-Eichung ausgemessen, und diese Werte werden abgespeichert. In einem weiteren Meßvorgang wird die Flächendeckung der vorliegenden Druckplatte vermessen, und diese Meßwerte werden in Übereinstimmung mit den Meßwerten der zwei zuvor vermessenen Eichplatten gebracht. Daraufhin werden die korrigierten Meßwerte gespeichert. Nach diesen korrigierten Meßwerten wird die Einstellung der Farbzonenstellschrauben vorgenommen.

Es ist weiterhin aus der GB-A-20 22 514 ein Verfahren zur Ermittlung der Flächendeckung einer Druckvorlage für Druckmaschinen bekannt, bei dem mittels einer, mit Sensoren ausgerüsteten Meßeinrichtung eine Eichung der Sensoren anhand mehrerer Eichstreifen mit minimaler und maximaler Flächendeckung durchgeführt wird. Diese Eichung erfolgt mit Filmstreifen wodurch die Sensoren auf gleiche Werte abgestimmt werden. Die Eichung wird zu Beginn bzw. am Ende des Meßlaufs durchgeführt. Ein Nachteil bei dieser Eichung der Sensoren besteht darin, daß keine filmvorlagenspezifische Eichung erfolgt, sondern vorausgesetzt wird, daß die Filmstreifen mit dem Film bzw. mit der Druckvorlage identisch sind. Weicht das Reflektionsverhalten des Films bzw. der Druckvorlage von dem Reflexionsverhalten des für die Eichung vorgesehenen Filmstreifens ab, dann liegt eine fehlerhafte Eichung vor, die nicht korrigiert werden kann und die zu einer falschen Auswertung der Druckvorlage bzw. des Films führt.

Ferner werden in der DE-OS-29 50 606 und in der EP-A-29 561 Vorrichtungen zur zonenweisen optoelektronischen Messung der Flächendeckung einer Druckvorlage beschrieben. Es wird die Helligkeitsverteilung einer Druckvorlage durch Aufnahmeelemente wahrgenommen und einem Rechner zugeführt, der daraufhin entsprechende Signale zur Einstellung von Farbzonenschrauben liefert. Nachteilig ist bei diesen Systemen zur Vorbestimmung der Einstellwerte der Farbzonenstellschrauben, daß keine automatische Eichung der Meßeinrichtung zum Ausgleich von Schwankungen der Beleuchtungseinrichtung und zum Ausgleich von unterschiedlichen Remissionsverhältnisse der auszumessenden Druckplatten stattfindet. Ferner wirkt sich bei Beleuchtung mit Leuchtstoffröhren die netzfrequenzabhängige Intensitätsschwankung hinsichtlich eines möglichst schnellen Meßlaufs sehr nachteilig aus. Außerdem ist die Bedienung recht mühevoll, da die verschiedenen Formate und Plattentypen nur schwerlich berücksichtigt werden. Zudem handelt es sich meistens um technisch sehr aufwendige, teuere und komplizierte Lösungen, so daß deren Realisierungsaufwand in keinem guten wirtschaftlichen Verhältnis zu den gewünschten Makulatur- und Rüstzeiteinsparungen durch die Voreinstellung der Farbführung an den Druckmaschinen steht.

Der Erfindung liegt die Aufgabe zugrunde, ein Verfahren und eine Vorrichtung zur korrekten Ermittlung der Flächendeckung von Druckvorlagen oder Druckplatten zu entwickeln, wobei Störungen durch unterschiedliches Reflektionsverhalten oder Schwankungen von zu messenden Größen während des Meßvorgangs eliminiert werden sollen.

Diese Aufgabe wird gemäß den kennzeichnenden Merkmalen der Ansprüche 1 oder 10 gelöst.

Die Erfindung bezweckt eine einfachere Bedienbarkeit und Reproduzierbarkeit bei der Ausmessung von Flächendeckungsprofilen von Druckvorlagen. Außerdem soll eine große Flexibilität bezüglich Druckvorlagentypen und Druckvorlagenformaten gewährleistet sein, was zu erheblicher Kostenersparnis führt. Zudem wird durch die hohe Genauigkeit eine sichere Maschinenvoreinstellung erzielt.

Als besonderer Vorteil kristallisiert sich die Korrektureichung über ein spezielles Eichfeld, das sich auf der Druckvorlage befindet, bei der mehrere Referenzstellen im Eichbereich abgefragt werden, heraus. Dieses Eichfeld wird von einem Sensor während der Ermittlung der Flächendeckung der Druckvorlage erfaßt und weist Bereiche mit minimaler und/oder maximaler Flächendeckung auf.

Eine vorteilhafte Auswertung erfolgt über die automatische Zustandserkennung, die sich aus mehreren Komponenten zusammensetzt :

1. Eine Kontrolle des Vorhandenseins, der exakten Lage und der richtigen Länge eines Eichstreifens,

2. eine Erkennung des Eichfeldes auf der Druckplatte bzw. -vorlage, und

3. eine Abfrage des Typs und des Formates der Druckplatte bzw. -vorlage.

Zur Erzielung hoher Meßgenauigkeit und somit zur Steigerung der Qualität der Voreinstellung wird bei fehlendem Eichbereich auf der Druckplatte bzw. -vorlage vorteilhafterweise der minimale und der maximale Meßelementwert der Flächendeckung auf der Druckplatte bzw. -vorlage durch die Sensoren der Meßeinrichtung ermittelt, und eine anschließende Normierung auf diese Werte vorgenommen.

Es ist sinnvoll, die Meßeinrichtung so zu gestalten, daß sich im Innern eine Beleuchtungseinrichtung, bestehend aus Leuchtstoffröhren, deren zeitliche Intensitätsschwankungen geglättet werden, befindet, wodurch hohe Meßgeschwindigkeiten realisiert werden können. Die sich vor der Beleuchtungseinrichtung befindenden Streuscheiben dienen zur besseren, d. h. homogeneren Ausleuchtung der z. B. farbzonenbreiten Ausschnitte der Druckplatte. Durch die Verwendung von Polarisationsfiltern und Streufolien im Meßkopf können störende Glanzeffekte unterdrückt werden.

Eine bevorzugte Ausgestaltung der Erfindung besteht darin, daß die Empfangseinrichtung aus Sensoren aufgebaut ist, und über einen Multiplexer die Signale der einzelnen Sensoren einem Verstärker zur Verstärkung zugeleitet werden und durch einen Analog/Digitalwandler zur Speicherung digitalisiert werden. Steuerfunktionen und Berechnungsaufgaben werden von einem Rechner, der im Steuerstand integriert ist, übernommen.

Die an der Meßeinrichtung angebrachten Sicherungsrollen erweisen sich als besonderer Vorteil, da dadurch eine Beschädigung der Druckvorlage, die eventuell uneben aufliegt, vermieden wird.

Zur Erleichterung der Herstellung des Meßfeldes auf den verschiedenartigen Druckplatten sind Eichfeldmasken vorgesehen.

Eine Ausführung der Erfindung wird anhand der folgenden Zeichnungen erläutert. Es zeigen :

Fig. 1 eine Anordnung des Eichstreifens und der Druckplatte auf der Druckplattenauflagefläche mit Meßeinrichtung,

Fig. 2 einen senkrechten Schnitt durch die Meßeinrichtung,

Fig. 3 die Bedienungstastatur für den Druckplatten-Leser,

Fig. 4 die Komponenten der Meßeinrichtung,

Fig. 5 einen Film zur Herstellung des Eichstreifens,

Fig. 6 eine über eine Negativplatte gestülpte Eichfeldmaske mit Fenster (Negativ-Kopie) und

Fig. 7 eine über eine Positivplatte gestülpte Eichfeldmaske ohne Fenster (Positiv-Kopie).

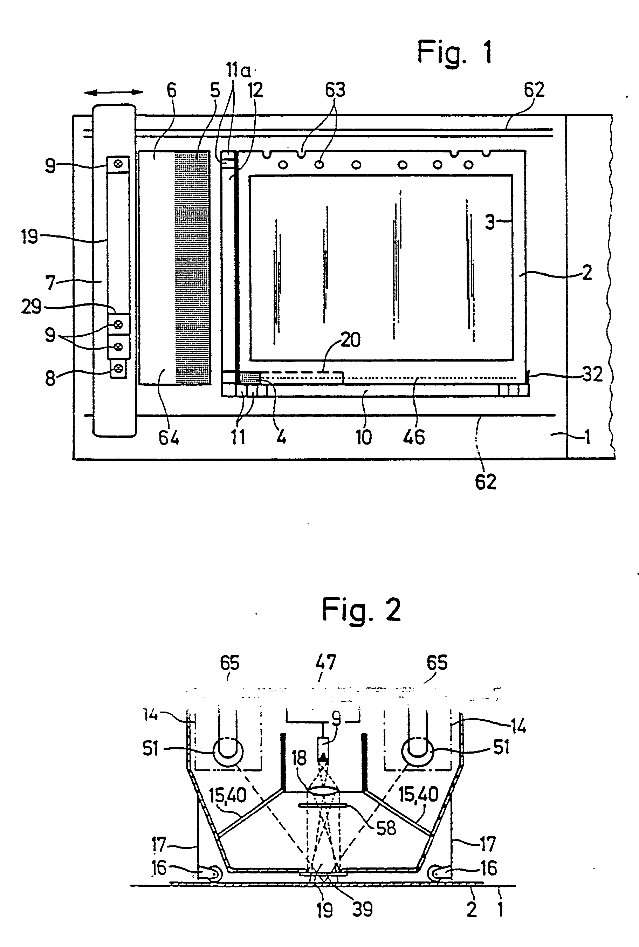

In Figur 1 ist die Druckplattenauflagefläche 1 mit der daran befestigten Meßeinrichtung 7, die in Führungsbahnen 62 läuft, abgebildet. Auf der Druckplattenauflagefläche 1 befindet sich eine Anschlagleiste 10, die im rechten Winkel zur Skalenleiste 12 angeordnet ist. Die horizontal angebrachte Anschlagleiste 10 ist zum Beispiel in zweiunddreißig Meßzonen 11, den Farbkastenzonen eines bestimmten Maschinenformats entsprechend, und die vertikal angebrachte Skalenleiste 12 zum Beispiel in zweiundzwanzig Meßbereiche 11a, der Anzahl der Sensoren entsprechend, unterteilt. Die Druckplatte 2 mit den Register- und Spannschienenstanzungen 63 ist an der Anschlagleiste 10 auf der Druckplattenauflagefläche 1 mittig zur Skalierung im Bereich der Druckplatte 2 ausgerichtet. Auf der Oberfläche der Druckplatte 2 befinden sich die farbführende Fläche 3 und das Eichfeld 4 ein Feld mit maximaler Flächendeckung, sowie der Eichbereich 20 (ein Bereich mit minimaler Flächendeckung) mit der Meßspur 46. Ferner ist auf der Druckplattenauflagefläche 1 links der vertikalen Skalenleiste 12 der Eichstreifen 64 angeordnet, der so unterteilt ist, daß das linke Feld 6 für die Minimumeichung und das rechte Feld 5 für die Maximumeichung der Farbführung vorgesehen ist.

Im Innern der Meßeinrichtung 7, wie in Fig. 2 abgebildet, sind zweiundzwanzig Sensoren 9 und ein Zusatzsensor 8 untergebracht, die während eines Meßlaufes die Farbwerte des Eichstreifens 64, der farbführenden Fläche 3, des Eichfeldes 4 und des Eichbereiches 20 der Druckplatte 2 ermitteln.

Im Innern der Meßeinrichtung 7 befinden sich Beleuchtungseinrichtungen 14 mit zwei Leuchtstoffröhren 51, die an Haltevorrichtungen 65 befestigt sind Im Strahlungsbereich der Leuchtstoffröhren 51 zur Druckplattenauflagefläche 1 hin befinden sich Streuscheiben 15, die auch als Polarisationsfilter 40 ausgebildet sein können. Die Sensoren 9 sind oberhalb einer Sammellinse 18 direkt über dem Meßschlitz 19 angeordnet und mit einer Anpassungselektronik 47 gekoppelt. In diesem Strahlengang befinden sich weiterhin Polarisationsfilter 58 und Streufolien 39. Die von den Sensoren 8 und 9 auszumessenden Flächen der Druckplatte 2 und des Eichstreifens 64 werden durch den Meßschlitz 19 und die Trennwände 29 der Lichtschächte festgelegt. Die Meßeinrichtung 7 wird durch einen nicht näher dargestellten Motor über einen Zahnriemen angetrieben und in Führungsbahnen 62 geführt. An der Meßeinrichtung 7 sind Sicherungsrollen 16, die mit Halterungen 17 an ihr befestigt sind, unterhalb angeordnet.

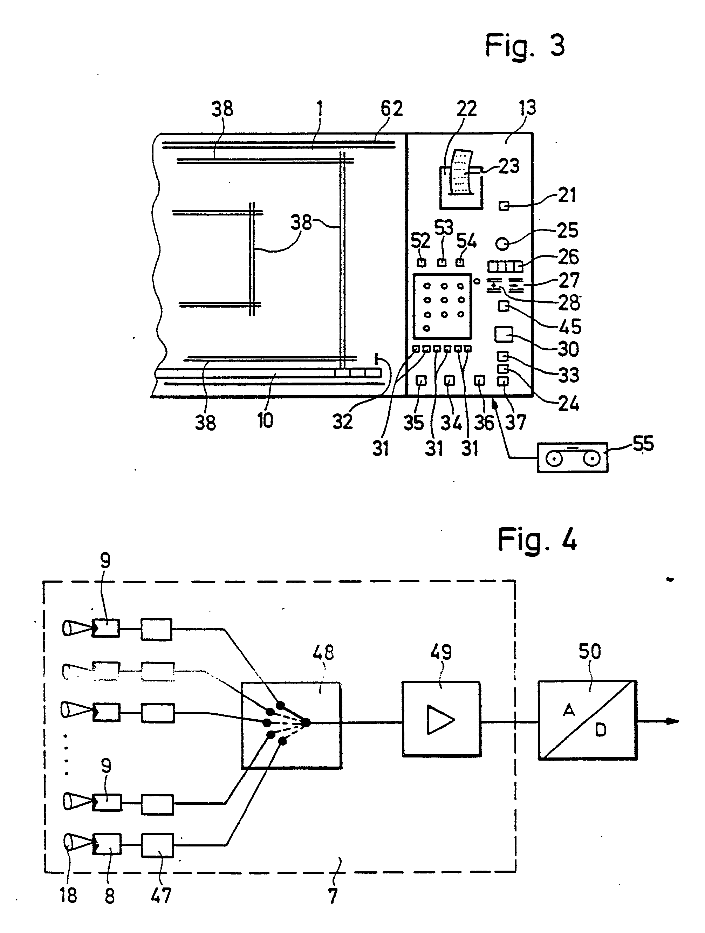

Figur 3 zeigt die einzelnen Bedienungselemente (Ausgabemöglichkeiten und Hinweise zur Bedienerführung) 21 bis 55, die sich auf der Pultplatte 13 des Druckplattenlesers befinden, um den Meßvorgang durchzuführen. Die Verfahrensschritte werden z. B. in folgender Reihenfolge ausgeführt :

Der Eichstreifen 64, der vorzugsweise aus dem Druckplattenmaterial besteht, wird auf die Druckplattenauflagefläche 1 links neben die Druckplatte 2 aufgelegt. Daraufhin wird das Gerät mittels des Ein- und Ausschalters 25 in Betrieb gesetzt. Mit Hilfe der Taste 30 wird ein Vakuum im Bereich der formatabhängigen Vakuumschlitze 38 wirksam, die sich in der Oberfläche der Druckplattenauflagefläche 1 befinden. Durch dieses Vakuum wird zunächst der Eichstreifen 64 angesaugt. Die Druckplatte 2 wird so aufgelegt, daß sich die Register- und Spannschienenstanzungen 63 am oberen Rand der Druckplattenauflagefläche 1 befinden und derart an der Anschlagleiste 10 ausgerichtet, daß der linke Plattenrand der Druckplatte 2 innerhalb der ersten Meßzone 11 liegt und mittig zwischen erster und Endmeßzone ausgerichtet ist. Strichmarkierungen 32 für die Nennbreite der Heidelberger Druckmaschinen-Standard-platten erleichtern das Ausrichten.

Daraufhin wird eine Vorwahl der gewünschten Ausgabe-, Protokoll- und Löschungsarten vom Bediener durch Tastenwahl der Tasten Ausgabeart 52, Protokollart 53, Löschungsart 54 getroffen.

Der Bediener kann zwischen einem numerischen, einem graphischen oder aber einem Testprotokoll wählen. Über die Ausgabetaste 24 kann sich der Bediener den Protokollstreifen 23 vom Protokolldrucker 22 ausdrucken lassen.

Wesentlichste Ausgabeart des Druckplattenlesers ist ein automatisch lesbarer Datenträger, z. B. eine Kassette 55. Die Meßwerte eines kompletten Plattensatzes können auf dieser Kassette 55 gespeichert werden. Diese Kassette 55 wird dann vorzugsweise von einer Eingabeeinheit im Steuerstand der Druckmaschine gelesen. Die Daten für den Farbbedarf werden dann in Maschinenvoreinstelldaten umgerechnet.

Das Format der Druckplatte 2 wird an den Kodierschaltern 26, die durch die Symbole für Formatbreite 27 und Formatlänge 28 gekennzeichnet sind, eingestellt. Es werden jeweils die Ziffern eingestellt, die durch die aufliegende Druckplatte 2 auf der Anschlagleiste 10 und der Skalenleiste 12 bedeckt werden. Die eingegebene Formatbreite bestimmt den Weg der Meßeinrichtung 7. Das an den Kodierschaltern 26 eingestellte Format wird durch Betätigung der Formateingabe-Taste 45 abgespeichert.

Mit Hilfe der Farbauszugwahltaste 31 wird der vorliegende Farbauszug der Druckplatte 2 gewählt, z. B. Black, Cyan, Magenta, Yellow oder X und Z für zwei Zusatzfarben. Mittels der Vakuum-Taste 30 wird die Saugluft für die Druckplatte 2, wobei die Saugluft auf die formatabhängig ausgewählten Vakuumschlitze 38 begrenzt ist, aktiviert. Mit Drücken der Starttaste 33 wird der Meßlauf gestartet.

Der Meßlauf beginnt mit dem Ausmessen des Feldes 6 für Minimumeichung und des Feldes 5 für Maximumeichung, danach erfolgt die Messung auf der Druckplatte 2 beginnend mit der ersten Meßzone 11 bis zu derjenigen Meßzone, die der eingestellten Formatbreite der Druckplatte 2 entspricht.

Mit erhöhter Geschwindigkeit gleitet die Meßeinrichtung 7 über die Druckplattenauflagefläche 1 zu ihrem Ausgangspunkt zurück. Nach Betätigung der Ausgabetaste 24 wird die gewählte Ausgabe veranlaßt. Es ist auch inöglich, zuvor weitere Druckplatten 2 mit anderen Farbauszügen auszumessen. Die Papiervorschubtaste 21 dient dem Papiervorschub des Protokollstreifens 23 am Protokolldrucker 22. Weitere dem Bediener nützliche Funktionen sind durch wahlweise Betätigung der Notstop-Taste 37, Neubeginn-Taste 36 und Rücknahme-Taste 35 (für Farbauszugwahl und/oder Eichfeldabschaltung) zu aktivieren. Den speziellen Zusatzsensor 8 kann man über die Eichsensorabschalttaste 34 ausschalten.

In Figur 4 ist der Signalfluß innerhalb der Meßeinrichtung 7 schematisch dargestellt. Die einzelnen Komponenten sind Sammellinsen 18, Sensoren 8 und 9, Anpassungselektronik 47, Multiplexer 48 und Verstärker 49. Der Antrieb der Meßeinrichtung 7 erfolgt über einen mit einem Getriebe verbundenen, nicht dargestellten Motor. Mit z. B. einem induktiven Meßfühler wird die Basis zur Positionsbestimmung der Meßeinrichtung 7 auf der Druckplattenauflagefläche 1 ermittelt. Über einen Zähler, der durch die von einer Pulsscheibe empfangenen Pulse aufnimmt, und über Vergleicher werden die Positionen der Meßeinrichtung 7 zur Meßwertübernahme bestimmt. Die Messungen erfolgen während des kontinuierlichen Laufs der Meßeinrichtung 7 über die Druckplattenauflagefläche 1. Die Meßwerte werden dem A/D-Wandler 50, der sich in der Verarbeitungselektronik des Gerätes befindet, zugeleitet.

Das von der Druckplatte 2 remittierte Licht wird über Sammellinsen 18 von Sensoren 8 und 9 empfangen, über die Anpassungselektronik 47 verarbeitet und über einen Multiplexer 48 einem Verstärker 49 und danach einem A/D-Wandler 50 zugeführt. Zur optimalen Ausnutzung des Auflösungsvermögens des A/D-Wandlers 50 wird der Verstärkungsfaktor des Verstärkers 49 dem maximalen Signal der Sensoren 9 auf dem Feld für Minimumeichung 6 des Eichstreifens 64 angepaßt. Wird eine Mindeststufenanzahl des ausnutzbaren Wandlerbereiches unterschritten, so wird über die Meßwerte der Felder für Maximumeichung 5 des Eichstreifens 64 die Offset-Beschaltung des Verstärkers 49 verändert. Im Falle einer schaltungsbedingten Rückwirkung zwischen Offset- und Verstärkereinstellung wird die Verstärkerschaltung neu optimiert. Dies erfordert unter Umständen vor dem eigentlichen Meßlauf einen erneuten Eichlauf. Im allgemeinen gehen Eichlauf und Meßlauf ineinander über, in jedem Fall innerhalb eines Druckplattensatzes nach der ersten Druckplatte.

Auf dem Eichstreifen 64 erfolgt die Eichung der einzelnen Sensoren 8 und 9. Über das Eichfeld 4 und den Eichbereich 20 auf der Druckplatte 2 werden vom Zusatzsensor 8 die Kontrastverhältnisse zwischen Eichstreifen 64 und Druckplatte 2 ermittelt. Über spezielle mathematische Operationen werden daraus die zuvor ermittelten Kennlinien der Sensoren 8 und 9 an die Verhältnisse der Druckplatte 2 angepaßt.

Wird in einer Meßzone auf der Druckplatte ein Flächendeckungswert kleiner 0 % festgestellt, so liegt ein Eichfehler infolge schadhafter Eichmeßflächen vor. Die Minimumeichung ist durch diesen Wert zu ersetzen, d. h. der negative Meßwert ist gleich Null zu setzen.

Um einen möglichst geringen Unterschied zwischen den Kontrastverhältnissen der Druckplatte 2 und denen des Eichstreifens 64 zu haben, sollte der Eichstreifen 64 aus dem der Druckplatte 2 entsprechenden Material hergestellt sein. Die verschiedenen Eichstreifen 64 können in einem speziellen Eichstreifendepot, das sich z. B. in dem Meßpult befindet, aufbewahrt werden.

Durch visuellen Vergleich zwischen Druckplatte 2 und Eichstreifen 64 ist vom Drucker der bestmögliche Eichstreifen 64 auszuwählen und in die Meßposition auf dem Meßpult einzulegen. Durch diese Maßnahme wird erreicht, daß die Empfangseinrichtung im späteren Arbeitsbereich der Druckplatte 2 eingeeicht wird. Dies führt in Verbindung mit der Nacheichung zu optimaler Auflösung und Meßgenauigkeit. Dies ist von besonderer Bedeutung, wenn wegen des möglicherweise fehlenden Eichfeldes 4 oder eines schadhaften Eichbereiches 20 und/oder Eichfeldes 4 der Zusatzsensor 8 durch Betätigung der Eichsensorabschalttaste 34 abgeschaltet werden muß.

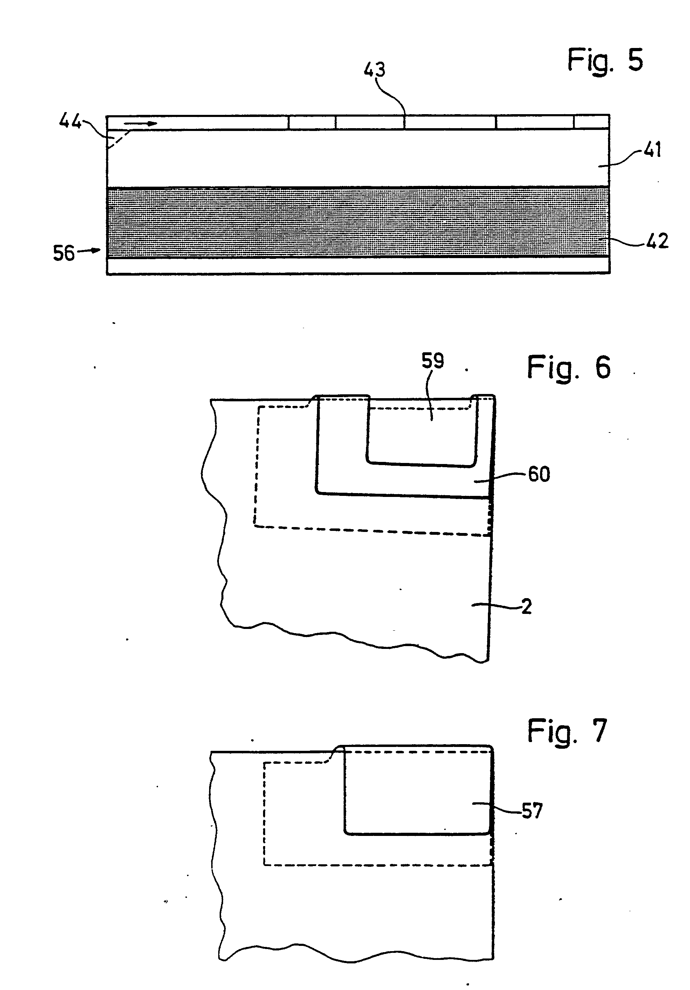

In Fig. 5 ist der Film 56 zur Herstellung der Eichstreifen 64 abgebildet. Die beiden Felder 41, 42 entsprechen der Minimum- und Maximumflächendeckung. Die Markierungsstriche 43 dienen zum eventuellen Beschnitt auf die verschiedenen Plattenlängen. Die Erkennungsecke 44 des Films 56 wird z. B. bei Aluminiumplatten abgeschnitten, bei Mehrmetallplatten beibehalten. Beim Arbeiten ohne automatische Plattentyperkennung wird ein Mikroschalter, befindlich in der Druckplattenaufnahmefläche 1 im Bereich des Eichstreifens 64, von dem Eichstreifen 64 betätigt, mit dessen Hilfe der Plattentyp erkannt wird.

Die in Fig. 6 abgebildete Eichfeldmaske 60 hat ein Fenster 59 für die Kopie des Eichfeldes 4 bei Negativkopien. Für die Erstellung des Eichfeldes 4 bei Positivkopien findet die Eichfeldmaske 57, wie in Figur 7 dargestellt, Verwendung. Die Eichfeldmasken 57 oder 60 bestehen aus beliebigem Material ; aus Blech gefertigte Eichfeldmasken haben sich besonders bewährt.

Zur maßgerechten Kopie des Eichfeldes 4 auf der Druckplatte 2 wird die entsprechende Eichfeldmaske 57 oder 60 bei dieser speziellen Ausführung über die rechte obere Ecke der Druckplatte 2, d. h. am Druckende, da sich dort keine Lochungen befinden, gestülpt.

Das Kopieren des Eichstreifens 64 in Druckrichtung der Platte ist besonders wichtig bei Druckplatten 2 mit einer ausgeprägten Glanzrichtung (gebürstet, etc.). Prinzipiell wäre auch die Integration glanzmildernder Maßnahmen innerhalb der Meßeinrichtung 7 möglich, z. B. Streufolien 39 oder der Einsatz von Polarisationsfiltern 40 im Meßschlitz 19 und/oder im Beleuchtungs- und Empfängerstrahlengang.

Im Gegensatz zu den Aluminiumdruckplatten wird bei den Mehrmetalldruckplatten viel Licht von den farbführenden Plattenteilen remittiert. Dies erfordert ein Invertieren des Meßsignales. Dem Gerät wird dies entweder durch automatische Betätigung eines speziellen Mikroschalters beim Einlegen des Eichstreifens mitgeteilt oder automatisch durch die beschriebene Plattentyperkennung.

Der Zusatzsensor 8 ist vorzugsweise durch die Eichsensorabschalttaste 34 abschaltbar, falls das Eichfeld 4 fehlerhaft ist oder ganz fehlt.

In einer anderen Ausführungsform als bei der beschriebenen Eingabe über Kodierschalter 26 ist die Formatfestlegung auch automatisch möglich, indem der Kontrastsprung der Druckplattenauflagefläche 1 zur Druckplatte 2 von den Sensoren 9 in vertikaler (Plattenlänge) und den Sensoren 8 oder 9 in horizontaler (Plattenbreite) Richtung ermittelt wird.

Das Ergebnis der Messung der Meßeinrichtung 7 sind Flächendeckungen pro Zone. Hierbei dient als Basis die durch Zonenbreite und Sensorenzahl bestimmte Fläche. Im allgemeinen ist die formatabhängige Drucklänge nicht identisch mit dieser Basisfläche. Es wird deshalb eine automatische Korrektur des Meßwertes zur Normierung auf 100 % durchgeführt. Dies geschieht durch Multiplikation des Ergebnisses mit formatabhängigen, fest eingegebenen Faktoren.

Mit diesen Flächendeckungswerten ist noch keine direkte Voreinstellung der Farbführung im Druckwerk einer Druckmaschine möglich. Aus den Flächendeckungswerten ist nun maschinentyp- und farbabhängig die Voreinstellung des Farbkastens (Zonenöffnung) und des Duktors (Farbstreifenbreite) zu berechnen. Dies wird vorzugsweise im Steuerpult der Druckmaschine geschehen, kann aber prinzipiell mit dem Rechner des Druckplattenlesers erfolgen.

Auch der Einsatz eines speziellen Voreinstell-Rechners ist möglich. Mittels dieses Voreinstell-Rechners mit entsprechenden Voreinstellprogrammen ist die universelle Bedienung mit Voreinstelldaten aller Maschinen realisierbar, sofern sie im Formatbereich liegen. Dieser Voreinstell-Rechner könnte auch die im Druckplattenleser fest programmierten farbkastenabhängigen Zonenabstände und Zonenbreiten auf andere Farbkästen umrechnen.

Aus den Flächendeckungsdaten läßt sich auch der Farbbedarf pro Bogen bzw. bei Rollenmaschinen pro Abschnittslänge durch Einbeziehung der Farbschichtdicke auf dem Bogen berechnen. Damit ist der Farbbedarf der Auflage im voraus abzuschätzen.

Teileliste

1 Druckplattenauflagefläche
2 Druckplatte
3 farbführende Fläche
4 Eichfeld
5 Feld für Maximumeichung
6 Feld für Minimumeichung
7 Meßeinrichtung
8 Zusatzsensor
9 Sensoren
10 Anschlagleiste
11 Meßzonen
11a Meßbereiche
12 Skalenleiste
13 Pultplatte des Druckplattenlesers
14 Beleuchtungseinrichtung
15 Streuscheiben
16 Sicherungsrollen
17 Halterungen
18 Sammellinse
19 Meßschlitz
20 Eichbereich
21 Papiervorschubtaste
22 Protokolldrucker
23 Protokollstreifen
24 Ausgabetaste
25 Ein- und Ausschalter
26 Kodierschalter
27 Symbol für Formatbreite
28 Symbol für Formatlänge
29 Trennwände

30 Vakuum-Taste
31 Farbauszugwahltasten
32 Strichmarkierungen
33 Starttaste
34 Eichsensorabschalttaste
35 Rücknahme-Taste
36 Neubeginn-Taste
37 Notstop-Taste
38 Vakuumschlitze
39 Streufolien
40 Polarisationsfilter
41 Feld für die Minimumflächendeckung
42 Feld für die Maximumflächendeckung
43 Markierungsstriche
44 Erkennungsecke
45 Formateingabe-Taste
46 Meßspur
47 Anpassungselektronik
48 Multiplexer
49 Verstärker
50 A/D-Wandler
51 Leuchtstoffröhren
52 Ausgabeart-Taste
53 Protokollart-Taste
54 Löschungsart-Taste
55 Kassette
56 Film
57 Eichfeldmaske
58 Polarisationsfilter
59 Fenster
60 Eichfeldmaske
61
62 Führungsbahnen
63 Register- und Spannschienenstanzungen
64 Eichstreifen
65 Haltevorrichtungen

**Patentansprüche**

1. Verfahren zur Ermittlung der Flächendeckung einer Druckvorlage oder Druckplatte (2) für Druckmaschinen, bei welchem ein Meßtisch (1) zur Auflage der Druckvorlage oder Druckplatte vorgesehen ist und eine über dem Meßtisch angeordnete und translatorisch über die Druckvorlage oder Druckplatte (2) bewegbare Meßeinrichtung (7) mit einer Anzahl von nebeneinander angeordneten Sensoren (9) vorgesehen ist, wobei eine Eichung jedes einzelnen Sensors (9) anhand der Meßwerte mindestens eines auf dem Meßtisch angeordneten Eichstreifens (64) mit jeweils minimalem und maximalem Anteil an Flächendeckung vor der Ermittlung der Flächendeckung durchgeführt wird, dadurch gekennzeichnet, daß mit einem der Sensoren (9) oder mit einem in der bewegbaren Meßeinrichtung (7) zusätzlich angeordneten und mittels des Eichstreifens (64) geeichten Sensors (8) während der Ermittlung der Flächendeckung der Druckvorlage oder Druckplatte (2) ein Druckvorlagen- bzw. Druckplatteneichbereich (4, 20, 46) mit minimaler und/oder maximaler Flächendeckung erfaßt wird, und damit druckvorlagen- bzw. druckplattenspezifische Korrekturwerte ermittelt und eine Korrektur der Eichung aller Sensoren (9) durchgeführt wird.

2. Verfahren nach Anspruch 1, dadurch gekennzeichnet, daß die Meßeinrichtung (7) die druckvorlagen- bzw. druckplattenspezifische Korrektureichung und Abstimmung über ein Eichfeld (4) und einen Eichbereich (20) entlang einer Meßspur (46), die sich auf der Druckvorlage oder Druckplatte (2) befinden, vornimmt, indem sie eine oder mehrere Referenzmeßstellen im Eichfeld (4), das maximale Flächendeckung aufweist und im Eichbereich (20) entlang der Meßspur (46), der minimale Flächendeckung besitzt, abfragt.

3. Verfahren nach einem der vorhergehenden Ansprüche, dadurch gekennzeichnet, daß mittels dieser Meßeinrichtung (7) zuerst eine automatische Zustandserkennung, d. h. eine Überprüfung des Vorhandenseins und der korrekten Lage des Eichstreifens (64) durch Kontrolle der Reihenfolge der Flächen mit minimaler und maximaler Flächendeckung, durchgeführt wird.

4. Verfahren nach einem der vorhergehenden Ansprüche 1 bis 3, dadurch gekennzeichnet, daß die zur Druckvorlage oder Druckplatte (2) gehörende richtige Länge des Eichstreifens (64) durch Beurteilung der Meßwerte eines oder mehrerer Sensoren (9) unter Berücksichtigung des Kontrastes zwischen Druckplattenauflagefläche (1) und Eichstreifen (64) überprüft wird.

5. Verfahren nach einem oder mehreren der vorhergehenden Ansprüche 2 bis 4, dadurch gekennzeichnet, daß mittels dieser Meßeinrichtung (7) das Vorhandensein des Eichfeldes (4) durch Abfragen der minimalen und maximalen Meßwerte im Eichbereich (20) bzw. im Eichfeld (4) auf der Druckplatte bzw. -vorlage (2) überprüft wird.

6. Verfahren nach einem oder mehreren der vorhergehenden Ansprüche 2 bis 5, dadurch gekennzeichnet, daß der Typ der Druckvorlage oder Druckplatte (2) durch Abfrage der Meßwerthöhen im Eichfeld (4) und im Eichbereich (20), vorzugsweise in Relation zu den Eichstreifenmeßwerten, erkannt wird.

7. Verfahren nach einem oder mehreren der vorhergehenden Ansprüche 1 bis 6, dadurch gekennzeichnet, daß das Format der Druckvorlage oder Druckplatte (2) durch Beurteilung der Kontraständerung zwischen Druckplattenauflagefläche (1) und Druckvorlage oder Druckplatte (2) automatisch ermittelt wird.

8. Verfahren nach einem oder mehreren der vorhergehenden Ansprüche 1 bis 7, dadurch gekennzeichnet, daß der minimale und der maximale Meßwert der Flächendeckung ohne Eichfeld durch einzelne oder mehrere Sensoren (9) der Meßeinrichtung (7) auf der Druckvorlage (2) selbst ermittelt werden, daß eine Normierung aller Meßwerte auf diese Werte durchgeführt wird, und daß somit ebenfalls eine Ermittlung der Flächendeckung druckvorlagen- bzw. druckplattenspezifisch erfolgt.

9. Verfahren nach einem oder mehreren der Ansprüche 1 bis 8, dadurch gekennzeichnet, daß das von einer Beleuchtungseinrichtung (14) emittierte Licht der Meßeinrichtung (7) von den einzelnen Druckvorlagen oder Druckplatten abschnitten remittiert wird, daß das remittierte Licht von den Sensoren (9) der Meßeinrichtung (7) in ein der Flächendeckung entsprechendes analoges Signal umgewandelt wird, und daß das Signal über einen Multiplexer (48) und einen Verstärker (49) einem Analog/Digitalwandler (50) zugeführt und nachfolgend zur Weiterverarbeitung abgespeichert wird.

10. Vorrichtung zur Durchführung des Verfahrens zur Ermittlung der Flächendeckung einer Druckvorlage oder Druckplatte (2) für Druckmaschinen nach einem der vorhergehenden Ansprüche 1 bis 9, wobei ein Meßtisch zur Auflage der Druckvorlage oder Druckplatte vorgesehen ist und eine über dem Meßtisch angeordnete und translatorisch über die Druckvorlage oder Druckplatte (2) bewegbare Meßeinrichtung (7) mit einer Anzahl von nebeneinander angeordneten Sensoren (9) vorgesehen ist, und auf dem Meßtisch ein Eichstreifen (64) mit jeweils minimalem und maximalem Anteil an Flächendeckung angeordnet ist, und wobei

— die Druckvorlage oder Druckplatte (2) einen Bereich (4, 20, 46) mit minimaler und/oder maximaler Flächendeckung aufweist, welcher mit einem der Sensoren (9) oder mit einem in der Meßeinrichtung (7) zusätzlich angeordneten und mittels des Eichstreifens (64) geeichten Sensors (8) während der Ermittlung der Flächendeckung der Druckvorlage oder Druckplatte (2) erfaßt wird, wobei für die Meßeinrichtung (7) eine Beleuchtungseinrichtung (14), bestehend aus Leuchtstoffröhren (51) deren zeitliche Intensitätsschwankungen geglättet werden, vorgesehen ist,

— vor den Leuchtstoffröhren (51), die einen definierten farbzonenbreiten Ausschnitt der Druckplatten homogen beleuchten, Streuscheiben (15) und/oder Polarisationsfilter (40) angeordnet sind, und

— die Sensoren (9) das remittierte Licht einzelner Abschnitte des zonenbreiten Meßobjektausschnittes erfassen.

11. Vorrichtung nach Anspruch 10, dadurch gekennzeichnet, daß die Sensoren (9) das remittierte Licht einzelner Abschnitte des zonenbreiten Meßobjektausschnittes über ein Polarisationsfilter (58) erfassen.

12. Vorrichtung nach Anspruch 10 oder 11, dadurch gekennzeichnet, daß die Sensoren (9) das remittierte Licht einzelner Abschnitte des zonen breiten Meßobjektausschnittes über eine Streufolie (39) erfassen.

13. Vorrichtung nach einem der vorhergehenden Ansprüche 10 bis 12, dadurch gekennzeichnet, daß an der Meßeinrichtung (7) Sicherungsrollen (16) vorgesehen sind, um eine eventuell mögliche Beschädigung der Druckvorlage oder -platte (2) zu vermeiden.

14. Vorrichtung nach einem der vorhergehenden Ansprüche 10 bis 13, dadurch gekennzeichnet, daß zur Herstellung des Eichfeldes (4) auf der Druckplatte (2), eine Eichfeldmaske (57, 60) zur Kopie des Eichbereiches (4) auf die Druckplatte (2) über die Druckplatte (2) gestülpt wird.

15. Vorrichtung zur Herstellung des Eichfeldes nach Anspruch 14, dadurch gekennzeichnet, daß die Eichfeldmaske (60) zur Verwendung bei Negativ-Kopien der Druckplatte (2) eine Aussparung besitzt, durch die diese Platte an der entsprechenden Stelle (59) belichtet wird.

16. Vorrichtung zur Herstellung des Eichfeldes nach Anspruch 14, dadurch gekennzeichnet, daß die Eichfeldmaske (57) zur Verwendung bei Positiv-Kopien der Druckplatte (2) eine geschlossene Fläche besitzt, damit an dieser Stelle die Platte nicht belichtet wird.

## Claims

1. Method of determining the area coverage of a print original or printing plate (2) for printing machines by means of a measuring table (1), supporting the print original or printing plate, and a measuring device (7), being arranged above the measuring table so as to be movable translatorily over the print original or printing plate (2), said measuring device comprising a plurality of adjacent sensors (9), each of said sensors (9) being calibrated, before determining the respective area coverage, with the aid of the measured values of at least one calibration strip (64) placed on the measuring table, said calibration strip featuring both minimum and maximum area coverage, characterized in that, during the determination of the area coverage of the print original or printing plate (2), a calibration area (4, 20, 46), featuring minimum and/or maximum area coverage, of the print original or printing plate is scanned by one of the sensors (9) or by a sensor (8) being additionally provided in the measuring device (7) and being calibrated with the aid of the calibration strip (64), thus determining correction values specific to the print original or printing plate and correcting the calibration of each sensor (9).

2. Method according to Claim 1, characterized in that the measuring device (7) performs the correcting calibration specific to the print original or printing plate and an adjustment by means of a calibration field (4) and a calibration region (20), being both provided on the print original or printing plate (2), along a measuring track (46) by inquiring one or more reference measuring locations in the calibration field (4) with maximum area coverage and along the measuring track (46) in the calibration region (20) with minimum area coverage.

3. Method according to one of the preceding Claims, characterized in that, first of all, an automatic status recognition i. e. a verification of the presence and the correct position of the calibration strip (64) is carried out by means of the measuring device (7) by checking the sequence of the areas with minimum and maximum area coverage, respectively.

4. Method according to one or more of the preceding Claims 1 through 3, characterized in that the correct length of the calibration strip (64) in accordance with the respective print original or printing plate (2) is verified by assessing the measured values of one or more sensors (9), taking into account the contrast between the printing plate support surface (1) and the calibration strip (64).

5. Method according to one or more of the preceding Claims 2 through 4, characterized in that the measuring device (7) verifies the presence of the calibration field (4) by inquiring both the minimum and maximum measured values in the calibration region (20) and in the calibration field (4) on the print original or printing plate (2).

6. Method according to one or more of the preceding Claims 2 through 5, characterized in that the type of print original or printing plate (2) is recognized by inquiring the measured values in the calibration field (4) and in the calibration region (20), preferably in relation to the measured values of the calibration strip.

7. Method according to one or more of the preceding Claims 1 through 6, characterized in that the format of the print original or printing plate (2) is automatically determined by assessing the change in contrast between the printing plate support surface (1) and the print original or printing plate (2).

8. Method according to one or more of the preceding Claims 1 through 7, characterized in that the minimum and maximum measured values of the area coverage are determined on the print original (2) itself by one or more sensors (9) of the measuring device (7) without the aid of a calibration field, in that all measured values are normalized to said values, and in that the area coverage is thus likewise determined in a manner specific to the print original or printing plate.

9. Method according to one or more of the preceding Claims 1 through 8, characterized in that the light of the measuring device (7) emitted by an illumination device (14) is reflected from the individual sections of the print original or printing plate, in that the reflected light is converted by the sensors (9) of the measuring device (7) into an analog signal corresponding to the area coverage, and in that the signal is supplied to an analog/digital converter (50) via a multiplexer (48) and an amplifier (49) and is subsequently stored for further processing.

10. Device for implementing the method of determining the area coverage of a print original or printing plate (2) for printing machines according to one of the preceding Claims 1 through 9, said device comprising a measuring table supporting the print original or printing plate and a measuring device (7) being arranged above the measuring table so as to be movable translatorily over the print original or printing plate (2), said measuring device being equipped with a plurality of adjacent sensors (9), a calibration strip (64) with both minimum and maximum area coverage being provided on the measuring table, the print original or printing plate (2) featuring an area (4, 20, 46) with minimum and/or maximum area coverage, said area being scanned by one of the sensors (9) or by a sensor (8), being additionally provided in the measuring device (7) and being calibrated with the aid of the calibration strip (64), during the determination of the area coverage of the print original or printing plate (2), the measuring device (7) being equipped with an illumination device (14) consisting of fluorescent tubes (51) whose time variations in intensity are smoothened, diffusion plates (15) and/or polarization filters (40) being provided in front of the fluorescent tubes (51) for homogeneously illuminating a defined zone-wide portion of the printing plate, the sensors (9) scanning the light reflected from individual sections of the zone-wide portion of the measured object.

11. Device according to Claim 10, characterized in that the sensors (9) scan the light reflected from individual sections of the zone-wide portion of the measured object by means of a polarization filter (58).

12. Device according to Claim 10 or 11, characterized in that the sensors (9) scan the light reflected from individual sections of the zone-wide portion of the measured object by means of a diffusion film (39).

13. Device according to one of the preceding Claims 10 through 12, characterized in that the measuring device (7) is provided with safety rolls (16) preventing any damage to the print original or printing plate (2).

14. Device according to one or more of the preceding Claims 10 through 13, characterized in that the calibration field (4) is produced on the printing plate (2) by slipping a calibration field mask (57, 60) over the printing plate (2) for copying the calibration area (4) onto the printing plate (2).

15. Device for producing the calibration field according to Claim 14, characterized in that, when being used for negative copies of the printing plate (2), the calibration field mask (60) is provided with a window through which said plate is exposed at the respective location (59).

16. Device for producing the calibration field according to Claim 14, characterized in that, when being used for positive copies of the printing plate (2), the calibration field mask (57) has a continuous surface which prevents the plate from being exposed at the respective location.

**Revendications**

1. Procédé pour mesurer le taux de noircissement d'un modèle ou d'une plaque d'impression (2) pour machines d'impression, dans lequel il est prévu une table de mesure (1) pour donner appui au modèle ou à la plaque d'impression, et un dispositif de mesure (7) disposé au-dessus de la table de mesure et qui peut se déplacer en translation au-dessus du modèle ou de la plaque d'impression (2), et comportant un certain nombre de capteurs (9) disposés les uns à côté des autres, un étalonnage de chaque capteur individuel (9) étant exécuté à l'aide des valeurs mesurées d'au moins une bande étalon (64) disposée sur la table de mesure, qui comprend une fraction de minimum et une fraction de maximum du taux de noircissement avant la mesure du taux de noircissement, caractérisé, en ce qu'avec l'un des capteurs (9) ou un capteur (8) agencé en supplément dans le dispositif de mesure mobile (7) et étalonné au moyen de la bande étalon (64), on capte pendant la mesure du taux de noircissement du modèle ou de la plaque d'impression (2), une région étalon du modèle ou de la plaque d'impression (4, 20, 46) qui possède un taux de noircissement minimal et/ou un taux de noircissement maximal et, avec ceci, on obtient des valeurs correctives spécifiques au modèle ou à la plaque d'impression et on exécute une correction de l'étalonnage de tous les capteurs (9).

2. Procédé selon la revendication 1, caractérisé en ce que le dispositif de mesure (7) effectue l'étalonnage de correction spécifique au modèle ou à la plaque d'impression et à une adaptation par l'intermédiaire d'un champ de mesure (4) et d'une région de mesure (20) le long d'une piste de mesure (46), qui se trouvent sur le modèle ou sur la plaque d'impression (2), en ce sens qu'il interroge une ou plusieurs zone(s) de mesure de référence contenue(s) dans le champ étalon (4) qui présente le taux de noircissement maximal et dans la région étalon (20) le long de la piste de mesure (46) qui possède le taux de noircissement minimal.

3. Procédé selon l'une des revendications précédentes, caractérisé en ce qu'au moyen de ce dispositif de mesure (7), on exécute tout d'abord une identification d'état automatique, c'est-à-dire un contrôle de la présence et de la position correcte de la bande étalon (64), par le contrôle de l'ordre de succession des surfaces possédant le taux de noircissement minimal et le taux de noircissement maximal.

4. Procédé selon une des revendications précédentes 1 à 3, caractérisé en ce que la longueur de la bande étalon (64) correcte qui appartient au modèle ou à la plaque d'impression (2) est contrôlée par estimation des valeurs mesurées d'un ou de plusieurs capteur(s) (9), en tenant compte du contraste entre le plan d'appui (1) de la plaque d'impression et la bande de mesure (64).

5. Procédé selon une ou plusieurs des revendications précédentes 2 à 4, caractérisé en ce qu'au moyen de ce dispositif de mesure (7), on contrôle la présence du champ étalon (4) en interrogeant les valeurs mesurées minimale et maximale dans la région étalon (20) ou dans le champ étalon (4) sur la plaque d'impression ou sur le modèle (2).

6. Procédé selon une ou plusieurs des revendications précédentes 2 à 5, caractérisé en ce que le type d'original imprimé ou de plaque d'impression (2) est identifié en interrogeant les niveaux des valeurs mesurées dans le champ étalon (4) et dans la région étalon (20), de préférence en relation avec les valeurs mesurées des bandes étalons.

7. Procédé selon une ou plusieurs des revendications précédentes 1 à 6, caractérisé en ce que le format du modèle ou de la plaque d'impression (2) est mesuré automatiquement en évaluant la variation de contraste entre le plan d'appui (1) de la plaque d'impression et le modèle ou la plaque d'impression (2).

8. Procédé selon une ou plusieurs des revendications précédentes 1 à 7, caractérisé en ce que la valeur mesurée minimale et la valeur mesurée maximale du taux de noircissement sont mesurées sans champ étalon, par des capteurs distincts ou plusieurs capteurs (9) du dispositif de mesure (7) sur le modèle (2) lui-même, en ce qu'on exécute une normalisation de toutes les valeurs mesurées sur ces valeurs et que, de cette façon, il se produit en même temps un calcul du taux de noircissement d'une façon spécifique au modèle ou à la plaque d'impression.

9. Procédé selon une ou plusieurs des revendications 1 à 8, caractérisé en ce que la lumière du dispositif de mesure (7) émise par un dispositif d'éclairage (14) est réémise par les différentes parties du modèle ou de la plaque d'impression, en ce que la lumière réémise est transformée par les capteurs (9) du dispositif de mesure (7) en un signal analogique correspondant au taux de noircissement, et en ce que le signal est transmis à un convertisseur analogique/numérique (50) par l'intermédiaire d'un multiplexeur (48) et d'un amplificateur (49), et qu'il est ensuite mémorisé en vue du traitement ultérieur.

10. Dispositif pour la mise en œuvre du procédé pour la mesure du taux de noircissement d'un modèle à imprimer ou d'une plaque d'impression (2), pour machines d'impression, selon une des revendications précédentes 1 à 9, dans lequel il est prévu une table de mesure destinée à porter le modèle ou la plaque d'impression, et un dispositif de mesure (7) muni d'un certain nombre de capteurs (9) disposés les uns à côté des autres et qui est disposé au-dessus de la table de mesure et peut se déplacer en translation au-dessus du modèle ou de la plaque d'impression, et une bande étalon (64) présentant un minimum et un maximum de taux de noircissement est disposée sur la table de mesure, et dans lequel le modèle ou la plaque d'impression (2) possède une région (4, 20, 40) présentant un taux de noircissement minimal et/ou un taux de noircissement maximal, région qui est captée au moyen d'un des capteurs (9) ou au moyen d'un capteur (8) disposé en supplément dans le dispositif de mesure (7) et étalonnée au moyen de la bande étalon (64), pendant la mesure du taux de noircissement du modèle ou de la plaque d'impression (2) et dans lequel il est prévu, pour le dispositif de mesure (7) un dispositif d'éclairage (14) composé de tubes fluorescents (51) dont les fluctuations d'intensité dans le temps sont nivelées, des diffuseurs (15) et/ou filtres polarisants (40) sont disposés devant les tubes fluorescents (51) qui illuminent une zone de largeur définie correspondant aux zones d'encrage de la plaque d'impression, et les capteurs (9) captent la lumière réémise par les différentes zones de la partie de l'objet mesuré qui possède la largeur des zones d'encrage.

11. Dispositif selon la revendication 10, caractérisé en ce que les capteurs (9) captent la lumière réémise par les différentes parties de la zone de l'objet de mesure possédant la largeur d'une zone, à travers un filtre polarisant (58).

12. Dispositif selon la revendication 10 ou 11, caractérisé en ce que les capteurs (9) captent la lumière réémise de différentes parties de la zone de l'objet de mesure présentant la largeur d'une zone d'encrage, par l'intermédiaire d'une feuille diffusante (39).

13. Dispositif selon l'une des revendications précédentes 10 à 12, caractérisé en ce que le dispositif de mesure (7) présente des galets de protection (16) pour éviter une éventuelle détérioration possible du modèle ou de la plaque d'impression (2).

14. Dispositif selon l'une des revendications précédentes 10 à 13, caractérisé en ce que pour former le champ étalon (4) sur la plaque d'impression (2), on retourne sur la plaque d'impression (2) un masque de champ étalon (57, 60) pour copier la région étalon (4) sur la plaque d'impression (2).

15. Dispositif pour la production du champ étalon selon la revendication 14, caractérisé en ce que le masque du champ étalon (60) destiné à être utilisé dans des copies négatives de la plaque d'impression (2) présente une ouverture à travers laquelle cette plaque est éclairée à l'endroit correspondant (59).

16. Dispositif pour la production du champ étalon selon la revendication 14, caractérisé en ce que le masque de champ étalon (57) destiné à être utilisé dans le cas de copies positives de la plaque d'impression (2) possède une surface fermée afin que la plaque en soit pas éclairée à cet endroit.

## Fig. 1

## Fig. 2

## Fig. 3

## Fig. 4

Fig. 5

Fig. 6

Fig. 7